# NEW EUROPEAN PATENT SPECIFICATION

(11) **EP 0 292 237 B2**
(45) Date of publication and mention of the opposition decision: **01.03.2000**
(45) Mention of the grant of the patent: 08.02.1995
(21) Application number: 88304457.0
(22) Date of filing: 17.05.1988
(51) Int. Cl.: G06F 15/76

(54) **IC card and IC card information processing system using the IC card**
Informationsverarbeitungssystem mit IC-Karte
Système informatique avec carte de CI

(30) Priority: 19.05.1987 JP 12228887; 19.05.1987 JP 12228987
(43) Date of publication of application: 23.11.1988
(73) Proprietor: Hitachi Maxell Ltd., Osaka-fu (JP)
(72) Inventor: Sugawara, Ken, Yuki-gun Ibaraki-ken (JP); Yamauchi, Satoru, Yuki-gun Ibaraki-ken (JP); Shinagawa, Tohru, Toride-shi (JP); Miyamoto, Keiji, Kitasoma-gun Ibaraki-ken (JP)
(74) Representative: Senior, Alan Murray

(56) References cited:
- EP-A- 0 077 404
- EP-A- 0 152 024
- EP-A- 0 157 303
- EP-A- 0 167 044
- EP-A- 0 193 635
- EP-A- 0 194 893
- EP-A- 0 220 718
- WO-A-80/00383
- US-A- 3 906 460
- PATENT ABSTRACTS OF JAPAN, vol. 10, no. 225 (P-484), 6th August 1986 & JP-A-61 60 131

## Description

This invention relates to IC cards and IC card information processing systems and an IC card information processing system which can be used for multiple purposes.

Generally, IC cards have a storage incorporating a microprocessor and a non-volatile memory such as a mask ROM, an EPROM or an EEPROM. The use of such a ROM can attain advantages that backup by means of a battery required as in the case of RAM's can be eliminated and information can be fixed to ensure high reliability and that because of the removal of the battery, the card can make its own thickness small.

However, the non-volatile memory is disadvantageous in that its access speed is low and it takes a long processing time to directly read the memory. Particularly, because of recent trend of increasing memory capacity and handling information amounts in great variety, time required to selectively read specified information out of the non-volatile memory tends to increase more and more.

Therefore, to meet desirability for high speed processings, a high access speed memory such as an SRAM has necessarily been used. But the SRAM needs the backup power supply and disadvantageously prevents the IC card from being made sufficiently thin.

In addition, the conventional IC card has a predetermined processing program and one IC card is permitted to perform only the predetermined processing but is not permitted to be used for different purposes. To comply with different purposes, it is conceivable to adopt an architecture wherein the data storage area of the IC card is divided into a plurality of blocks and different memory areas are accessed in accordance with different purposes. But this architecture has the following disadvantages:
(1) Since protocol is predetermined in relation to the host computer, hardware has no versatility for general purpose.
(2) Data cannot be used in common for different memory areas which are accessed in accordance with different purposes.

EP-A-0,077,404 discloses a data processing system comprising microprocessors containing random access memories (RAM), a non-volatile memory containing the control program of the microprocessors and a loading unit for transferring the content of the non-volatile memory to the microprocessors via a data bus. To facilitate execution of the control program the control program is transferred from the non-volatile memory to the random access memory in the microprocessors.

EP-A-0,157,303, on which the preamble of claim 1 is based, discloses an IC card including a CPU, a PROM for storing processing programs and connecting pins for connecting the IC card to an external processing unit. After insertion of the IC card, the external unit inputs into the IC card the name of a program to be run. An execution counter counts the number of times that a specific program has been run and allows subsequent execution of the program only when the value of the counter is below a predetermined value.

According to a first aspect of the present invention there is provided an IC card comprising an operation/processing unit, storage means for storing data and a plurality of processing programs to be executed by the operation/processing unit, and a terminal for communicating selection information designating execution of one of said processing programs with an external information processing unit, characterised in that: said selection information further identifies the external information processing unit; said storage means comprises a memory table for storing identification information identifying in respect of each one of a plurality of external information processing units whether or not each of the processing programs stored in said storage means is executable when the IC card is inserted in the respective external information processing unit; and the operation/processing unit is arranged to look up said memory table to compare the selection information received via said terminal with the identification information stored in the memory table and to execute said one of the plurality of processing programs designated by said selection information only when the identification information indicates that said one processing program to be executed is executable when the IC card is inserted in the external information processing unit identified by said selection information.

Preferably the memory table comprises a plurality of memory areas for storing a plurality of predetermined ID codes for external units and the operation/processing unit is arranged to compare additional identification information, received via the terminal from the external information processing unit, with the plurality of predetermined ID codes and to determine not to execute said one processing program when the external unit is not a licensed unit. Further preferably the storage means comprises non-volatile first storage means for storing the processing programs and data to be executed by the operation/processing unit and volatile second storage means having a shorter access time than that of the non-volatile first storage means, wherein said operation processing unit is arranged to transfer said one program and data stored in the non-volatile storage for execution.

Where a non-volatile memory and a memory having a shorter access time than that of the non-volatile memory are provided, a processing program and data necessary for a current processing can be transferred temporarily from the non-volatile memory of the memory of shorter access time in order to transmit and receive a signal to and from the external unit, thereby increasing the processing speed of the IC card. The processing program and data necessary for the current processing are normally stored in the non-volatile memory, without suffering from impairment and data transfer is effected each time the IC card is used so that reliability can be ensured as in the case of the conventional IC card having the non-volatile memory alone.

When the non-volatile memory stores a plurality of processing programs and data, one of the plurality of processing programs and data necessary for a current processing can be transferred from the non-volatile memory to the memory having a shorter access time than that of the non-volatile memory in order to transmit and receive a signal to and from the external unit, thereby increasing the processing speed of the IC card even when the IC card incorporates a great number of processing programs.

According to a further aspect of the present invention there is provided an IC card information processing system comprising an IC card in accordance with said first aspect of the present invention above, and a said external information processing unit for transmitting and receiving data to and from the IC card when inserted in the information processing unit, wherein the information processing unit is operable to transmit to the IC card selection information for designating executation of one of the plurality of processing programs and for identifying the external information processing unit.

Embodiments of apparatus in accordance with the present invention will now be described, by way of example only, with reference to the accompanying drawings in which:
Figure 1 is a block diagram illustrating an example of an IC card which does not include all the features of the present invention, but is useful to assist understanding.
Figure 2 is a block diagram illustrating an embodiment of an IC card information processing system of the invention to which the IC card of the invention is applied.
Figure 3 shows a selection table for application programs stored in the memory in the IC card.

The invention will now be described by way of example with reference to the accompanying drawings.

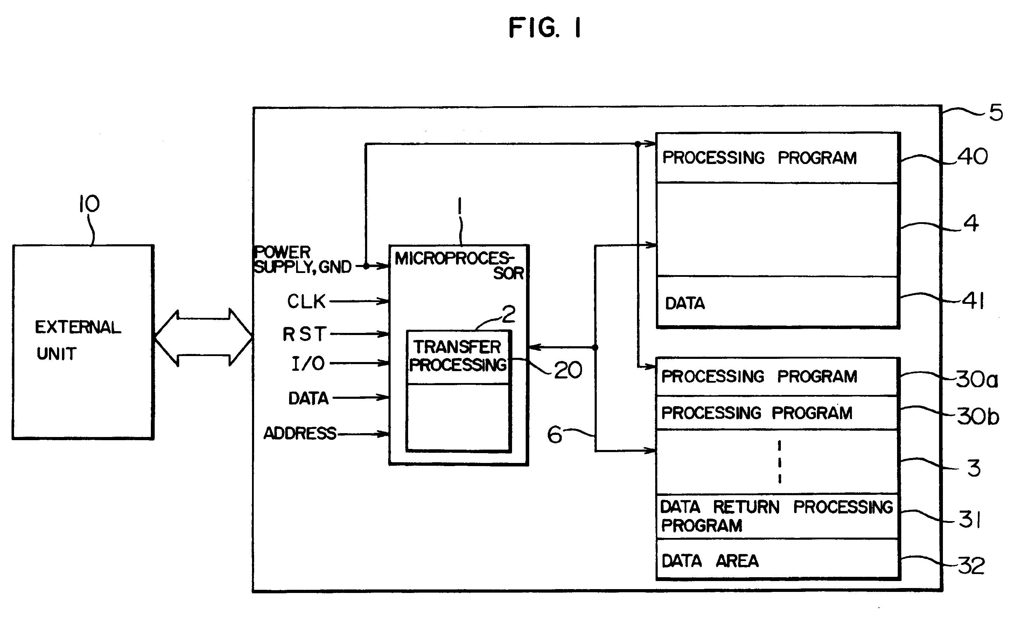

Fig. 1 is a block diagram illustrating an example of an IC card which does not include all the features of the present invention, but is useful to assist understanding.

Referring to Fig. 1, an IC card 5 is inserted, in use, into an external unit 10 such as a card reader/writer and is supplied with control signals and power to transmit and receive data to and from the external unit.

The IC card 5 has an operation/processing unit (hereinafter referred to as a microprocessor) 1, an EEPROM 3 and a SRAM 4. The EEPROM 3 and SRAM 4 are coupled to the microprocessor 1 through a system bus 6 of the microprocessor 1.

With the IC card 5 inserted in the external unit 10, power is supplied from the external unit 10 to the microprocessor 1, EEPROM 3 and SRAM 4 as will be seen from Fig. 1. The microprocessor 1 incorporates a mask ROM 2 having address spaces to which control programs are allotted and accesses the EEPROM 3 and SRAM 4 under the direction of the control programs. A transfer processing program 20 for transferring a predetermined amount of data from a predetermined address on the EEPROM 3 to the SRAM 4 is stored as a head control program.

The EEPROM 3 has processing programs 30a, 30b, ---- corresponding to various application processings, a data return processing program 31 and a data area 32. Data used in the processing programs are stored in the data area 32. The processing programs and data stored in the ROM will not collapse even when the IC card is disconnected from the power supply. Data for use with the various processing programs 30a, 30b, ---- are collectively stored in the data area 32.

The processing programs 30a, 30b, ---- corresponding to application processings are so programmed in advance as to be executed within the range of address spaces allocated to the SRAM 4 so that data 41 in the SRAM 4 may be accessed.

When the IC card 5 is inserted, in use, into the external unit 10, power and signals such as clock signal (CLK) and reset signal (RST) are supplied to the IC card 5 through external terminals.

When detecting the reset signal transmitted from the external unit 10, the microprocessor 1 starts processing in accordance with a control program stored in the mask ROM 2 within the microprocessor 1. Since the program 20 for transferring the processing program and data in the EEPROM 3 to the SRAM 4 heads the programs in the mask ROM 2, the transfer processing program 20 is first initiated in response to the reset signal to transfer, for example, the processing program 30a and data in the data area 32 to the SRAM 4. Thus, on the SRAM 4, the transferred processing program 30a behaves as a processing program 40 and the data transferred from the data area 32 behaves as data 41.

Upon completion of the transfer, the processing program 40 in the SRAM 4 is started by the last instruction of the transfer processing program 20. The start of this program is initiated by accessing, for example, the head address on the SRAM 4. Since the processing program 30a is so programmed in advance as to be executed within the range of address spaces allocated to the SRAM 4 so that the data 41 in the SRAM 4 may be accessed, the SRAM 4 is initiated to be read/written in connection with the data 41 upon start of the processing program 40 and information exchange is executed between the SRAM 4 and the external unit 10 in accordance with the processing program 40.

Read/write of data for the IC card 5 is thus executed by accessing the transferred data, that is, the data 41 in the SRAM 4. Accordingly, when the contents of data representative of, for example, the balance in an ATM card of a bank is updated, the data 41 is rewritten in accordance with the updated contents. Each of the processing programs 30a, 30b, ---- has as the last instruction an instruction for initiating the data return processing program 31.

When data is changed after completion of data exchange between the IC card and the external unit 10, the data return processing program 31 is initiated by the processing program 40 and the contents of data 41 is returned to the data area 32 of the EEPROM 3 so that the updated data is stored in this area 32.

Thus, when write or change of data is effected, the contents of data 41 is changed before the IC card 5 is discharged from the external unit 10 (for example, a card reader/writer), so that the changed data can be transferred to the original position or data area 32. Changes of data can be managed or checked easily by, for example, setting a flag indicating whether an area for updated data indicative of, for example, the balance within the data 41 is accessed.

In the above example, of the processing programs 30a, 30b, ----, the processing program 30a which is normally used is transferred to the SRAM 4 in response to the reset signal. Under this condition, transfer of other processing programs to the SRAM 4 is executed as below. More particularly, when the IC card receives a processing program selection signal from the external unit 10, the selection signal interferes the processing program 40 in SRAM 4 behaving as the transferred normal processing program 30a and under the direction of the normal processing program 40, a different processing program is transferred to a space area on the SRAM 4 or to the position of the processing program 40. Accordingly, the normal processing program 30a has a transfer processing program for transfer of such processing programs as corresponding to normal application programs frequently used for withdrawal and payment, for example.

In an alternative, transfer processing programs for transfer of respective processing programs may be incorporated in advance in the mask ROM 20 and a transfer processing program in the mask ROM 20 may be designated by the normal processing program 30a so as to transfer the corresponding processing program.

In the above example, both the processing program and data are transferred to the SRAM but for the purpose of increasing the processing speed, only the processing program may be transferred with the data left behind in the EEPROM. Conversely, only the data may be transferred to the SRAM to improve the processing speed.

Further, the data return processing program stored in a special area on the EEPROM and separated from other programs may be inserted in respective application programs. In this case, the data return processing can be effected using only an application program transferred to the SRAM. Obviously, the return processing is not required if updating of data is not needed.

In the above example, the normal processing program is transferred to the SRAM in response to the insertion of the IC card into the external unit but obviously any one of the processing programs may be designated by a command from the external unit and the designated processing program may then be transferred to the SRAM.

Further, data collectively stored in the specified area irrespective of the processing programs may be stored in association with the respective processing programs. In this case, the data return may be managed using, for example, a return head address and the number of its bytes, so that the entirety of a transferred processing program inclusive of data therefor may be returned.

In place of storing the transfer program in the mask ROM of the microprocessor, the transfer program may be stored in the EEPROM and used to control the transfer of the processing program and data to the SRAM. Further, the transfer of data within the IC card may be omitted and data in the data area on the EEPROM (data area 32 in the above example) may be accessed directly.

The non-volatile memory exemplarily realized with the EEPROM may be realized with various types of non-volatile memory including an EPROM. The shorter access time memory used to compensate for the non-volatile memory generally having longer access time is exemplarily realized with the SRAM but it may obviously be realized with a DRAM or a bipolar transistor memory. Especially, the combination of SRAM and EEPROM exemplified in the above example may preferably be used, attaining the advantages of elimination of battery and improved data reliability.

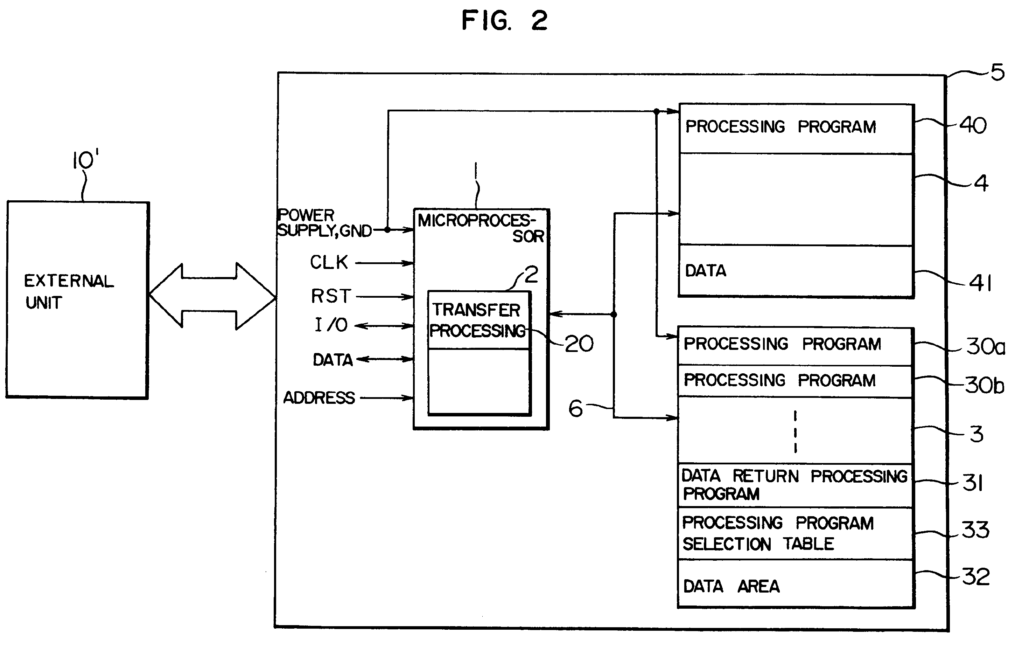

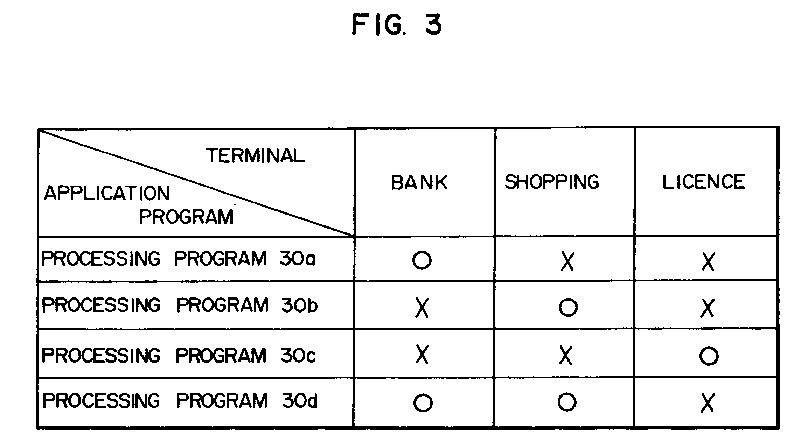

Fig. 2 is a block diagram illustrating an embodiment of an IC card information processing system to which the IC card of the invention is applied, and Fig. 3 shows a selection table for application programs stored in the memory in the IC card.

In the IC card information processing system shown in Fig. 2, a host computer 10' substitutes for the external unit 10 shown in Fig. 1 and an EEPROM 3 additionally has an area for a processing program selection table 33 in comparison to the EEPROM 3 of the Fig. 1 IC card.

The processing program selection table 33 is adapted to select one of processing programs 30a, 30b, ---- in response to designation information issued from the host computer 10' and permits execution of a program initiated in accordance with a terminal in use, as shown in Fig. 3.

When the IC card 5 is inserted, in use, into the host computer 10', power and signals such as clock signal (CLK) and reset signal (RST) are supplied to the IC card through external terminals. The microprocessor 1 responds to a signal from the host computer 10' to select and execute an application program corresponding to a designated one of the processing programs 30a, 30b, ----.

When detecting the reset signal transmitted from the host computer 10', the microprocessor 1 starts processing in accordance with a control program stored in the mask ROM 2 within the microprocessor 1. Since the program 20 for transferring the processing program and data in the EEPROM 3 to the SRAM 4 heads the programs in the mask ROM 2, the transfer processing program 20 is first initiated in response to the reset signal. Subsequently, the procedure enters a waiting loop in which the issuance of a selection signal (for example, containing terminal identifying information and processing program designating information) from the host computer 10' is awaited and upon issuance of the selection signal, the processing program selection table 33 in the EEPROM 3 is looked up. It is then decided whether the selected processing program is usable in relation to the terminal identifying information and designating information. If usable, the corresponding processing program and data are transferred to the SRAM 4. For example, when the processing program 30b is designated and the terminal identifying information from the host computer 10' indicates a shopping terminal, program transfer is permitted as will be seen from Fig. 3 with the result that the processing program 30b along with data in the data area 32 is transferred to the SRAM 4. Thus, on the SRAM 4, the transferred processing program 30a behaves as a processing program 40 and the data transferred from the data area 32 behaves as data 41.

In this manner, while the host computer 10' transmits to the IC card 5 the selection signal containing, for example, terminal identifying information (for example, represented by an ID code for identification of the host computer per se) and an application program code to be executed, the IC card 5 looks up the processing program selection table 33 prescribing the relation between the application program and the terminal represented by the ID code to determine whether a designated application program is permitted for execution in association with an identified terminal and executes the designated application program only when permitted.

Specifically, assuming applications to bank, shopping and license, there are stored in the EEPROM 3 an application program for bank as processing program 30a, an application program for shopping as processing program 30b and an application program for license as processing program 30c. A program for balance inquiry used in common to bank and shopping is stored as processing program 30d.

In the processing program selection table 33, the processing programs 30a and 30d are permitted for the bank terminal, the processing programs 30b and 30d are permitted for the shopping terminal and the processing program 30c alone is permitted for the license terminal, as indicated at "O" representative of permissible execution and "X" representative of impermissible execution in Fig. 3.

When the IC card 5 constructed as above is used in the bank terminal, only the processing programs 30a and 30d are permitted to be executed and the processing programs 30b and 30c are not permitted to be executed. For the purpose of security, each application program may obviously be protected using, for example, a key code.

Processing data used for different applications are stored in the specified area so that in addition to the balance amount, name and address of the card users may be stored in the specified area and data in the specified area may be accessed in accordance with the processing programs 30a to 30d.

The transfer of the processing program to the SRAM as described in connection with the embodiment is not always necessary. In the case of omission of the transfer processing of processing programs, it is not necessary for the identifying information and designating information to make a decision as to whether the processing program is permitted for transfer but simply, it may be decided by the identifying information and designating information whether the processing program stored in the memory is permitted for execution.

A memory table similar to the table of Fig. 3 may be used to select usable and unsuable processing programs in the same terminal (the same host computer). In this case, the selection of processing program can be executed using the designating information with omission of the identifying information. The memory table may be replaced with a simple processing program selection table which is looked up using the designating information to make a decision as to which program is permitted for selection.

As will be seen from the foregoing description, according to the invention, thanks to the provision of the non-volatile memory and the memory having a shorter access time than that of the non-volatile memory, a processing program and data necessary for a current processing can be transferred temporarily from the non-volatile memory to the memory of shorter access time in order to transmit and receive a signal to and from the external unit, thereby increasing the processing speed of the IC card. The processing program and data necessary for the current processing are normally stored in the non-volatile memory, without suffering from impairment and data transfer is effected each time the IC card is placed in use so that reliability can be ensured as in the case of the conventional IC card having the non-volatile memory alone.

When a plurality of processing programs are stored in the memory of the IC card, one IC card can be used for multiple purposes by causing the external unit to select one processing program from the plurality of processing programs.

When the non-volatile memory stores a plurality of processing programs and data, one of the plurality of processing programs and data necessary for a current processing can be transferred from the non-volatile memory to the memory having a shorter access time than that of the non-volatile memory in order to transmit and receive a signal to and from the external unit, thereby increasing the processing speed of the IC card even when the IC card incorporates a great number of processing programs.

## Claims

1. An IC card comprising
an operation/processing unit (1),
storage means (3,4) for storing data and a plurality of processing programs to be executed by the operation/processing unit (1), and
a terminal for communicating selection information designating execution of one of said processing programs with an external information processing unit,
characterised in that:
said selection information further identifies the external information processing unit; (5),
said storage means (3,4) comprises a memory table for storing identification information identifying in respect of each one of a plurality of external information processing units whether or not each of the processing programs stored in said storage means is executable when the IC card is inserted in the respective external information processing unit; and
the operation/processing unit (1) is arranged to look up said memory table to compare the selection information received via said terminal with the identification information stored in the memory table (33) and to execute said one of the plurality of processing programs designated by said selection information only when the identification information indicates that said one processing program to be executed is executable when the IC card is inserted in the external information processing unit identified by said selection information.

2. An IC card as claimed in claim 1, wherein the memory table (33) comprises a plurality of memory areas for storing a plurality of predetermined ID codes for external units and the operation/processing unit (1) is arranged to compare additional identification information, received via the terminal from the external information processing unit, with the plurality of predetermined ID codes and to determine not to execute said one processing program when the external unit is not a licensed unit.

3. An IC card as claimed in claim 1 or claim 2, wherein the storage means comprises non-volatile first storage means (3) for storing the processing programs and data to be executed by the operation/processing unit (1) and volatile second storage means (4) having a shorter access time than that of the non-volatile first storage means, wherein said operation processing unit (1) is arranged to transfer said one program and data stored in the non-volatile storage for execution.

4. An IC card as claimed in claim 1 or claim 2, wherein the storage means includes non-volatile first storage means (3) for storing the processing programs and data, and second storage means (4) having a shorter access time than that of the first storage means, wherein the operation/processing unit (1) is operable to transfer the processing programs and/or data of the first storage means to the second storage means, to access the second storage means to fetch the processing programs and/or data and to respond to an external signal.

5. An IC card as claimed in claim 3 or claim 4, wherein the operation/processing unit includes a transfer processing program (20) for transferring the processing program and/or data from the first storage means to the second storage means, said transfer processing program being for transferring the processing programs and/or data from the first storage means (3) to the second storage means (4) when the IC card is inserted in the external information processing unit (10) or the operation/processing unit (1) receives a predetermined control signal from the external unit.

6. An IC card as claimed in claim 3 or claim 4, wherein the first storage means (3) is for storing a transfer processing program for transferring the processing programs and data from the first storage means to the second storage means (4) and the operation/processing unit (1) is arranged to execute the transfer processing program to transfer the processing programs and/or data from the first storage means to the second storage means when the IC card is inserted in an external information processing unit (10) or the operation/processing unit receives a predetermined control signal.

7. An IC card as claimed in claim 5, wherein after completion of data exchange between the external unit and the operation/processing unit (1), the operation/processing unit is arranged to perform a data return processing step for transferring data stored in the second storage means (4) to a data area (32) in the first storage means (3) corresponding with the original position of that data and to store the returned data in the data area.

8. An IC card as claimed in claim 5, wherein the operation/processing unit (1) is arranged to check whether a data area (41) in the second storage means (4) is accessed during data exchange between the operation/processing unit (1) and the external unit and, only when the data area in the second storage means is accessed, to perform, after completion of data exchange between the operation/processing unit and the external unit, a data return processing step for transferring data stored in the second storage means to a data area (32) in the first storage means (3) corresponding to the original position of that data and to store the updated data in said first storage means.

9. An IC card as claimed in any of claims 3 to 6, wherein the first storage means has a data return processing program area (31) and the processing program for transfer from the first storage means (3) to the second storage means (4) and for execution by the operation/processing unit (1) has as its last instruction an instruction for initiating a data return processing program stored in said first storage means, whereby the operation/processing unit performs, on the basis of the data return processing program, a data return processing procedure for transferring data stored in the second storage means to a data area (32) corresponding with the original position of that data within the first storage means.

10. An IC card as claimed in any of claims 3 to 6, wherein the processing program for transfer from the first storage means (3) to the second storage means (4) for execution by the operation/processing unit (1) has as its last program a data return processing program for use in transferring data stored in the second storage means to a data area (32) representing the original position of that data within the first storage means.

11. An IC card as claimed in any of claims 3 to 10, wherein the first storage means (3) is an EEPROM and the second storage means (4) is an SRAM.

12. An IC card as claimed in any of claims 3 to 11, wherein the memory capacity of the second storage means (4) is not smaller than the sum of the memory capacity of the first storage means (3) for use in storing the plurality of processing programs and the memory capacity of the first storage means for use in storing the data, and the data for transfer from the first storage means and each of the plurality of processing programs are, in use, stored in different areas (41, 40) of the second storage means.

13. An IC card as claimed in any of claims 3 to 12, wherein data to be stored in the first storage means (3) is so divided as to be stored in a plurality of data areas in association with the plurality of processing programs, and, in use, only data stored in a data area in association with a selected processing program is transferred to the second storage means (4).

14. An IC card information processing system such system comprising an IC card (5) as claimed in any one of the preceding claims; and a said external information processing unit (10') for transmitting and receiving data to and from the IC card when inserted in the information processing unit, wherein the information processing unit is operable to transmit to the IC card selection information for designating executation of one of the plurality of processing programs and for identifying the external information processing unit.

15. An IC card information processing system as claimed in claim 14 wherein the storage means (3, 4) of the IC card has program storage areas for respectively storing the plurality of processing programs and a data area for storing data commonly accessible in association with the plurality of processing programs, and said operation/processing unit is responsive to the designation information to select one of the plurality of processing programs and to access the data area corresponding to the selected processing program to transmit and receive data to and from the information processing unit (10').

## Patentansprüche

1. IC-Karte, die
eine Betriebs/Verarbeitungseinheit (1),
eine Speichervorrichtung (3, 4) für die Abspeicherung einer Vielzahl von Verarbeitungsprogrammen und Daten, die durch die Betriebs/Verarbeitungseinheit (1) verarbeitet werden sollen, und
einen Anschluß für den Austausch von Information, die die Ausführung eines Verarbeitungsprogramms bezeichnet, mit einer externen Informationsverarbeitungseinheit enthält,
**dadurch gekennzeichnet,** daß
die Auswahlinformation außerdem die externe Informationsverarbeitungseinheit (5) definiert,
die Speichervorrichtung (3, 4) eine Speichertabelle zum Speichern von Identifizierungsinformation umfaßt, die in bezug auf jede von mehreren externen Informationsverarbeitungseinheiten festlegt, ob jedes der Verarbeitungsprogramme in der Speichervorrichtung ausführbar ist oder nicht, wenn die IC-Karte in die jeweilige externe Informationsverarbeitungseinheit eingeschoben wird, und
die Betriebs/Verarbeitungseinheit (1) so eingerichtet ist, daß sie in der Speichertabelle nachsieht, um die Auswahlinformation, die sie über den Anschluß erhalten hat, mit der Identifizierungsinformation in der Speichertabelle (33) zu vergleichen und das eine der Verarbeitungsprogramme auszuführen, das durch die Auswahlinformation bezeichnet worden ist, nur wenn die Identifizierungsinformation anzeigt, daß das eine Verarbeitungsprogramm, das ausgeführt werden soll, ausführbar ist, wenn die IC-Karte in die externe Informationsverarbeitungseinheit eingeschoben ist, die durch die Auswahlinformation identifiziert worden ist.

2. IC-Karte nach Anspruch 1, wobei die Speichertabelle (33) eine Vielzahl von Speicherbereichen für die Speicherung einer Vielzahl von vorgegebenen ID-Codes für externe Einheiten umfaßt und die Betriebs/Verarbeitungseinheit (1) dazu dient, zusätzliche Erkennungsinformation, die über den Anschluß von der externen Informationsverarbeitungseinheit empfangen wurde, mit der Vielzahl von vorgegebenen ID-Codes zu vergleichen und festzulegen, daß das besagte eine Verarbeitungsprogramm nicht ausgeführt wird, wenn die externe Einheit keine zulässige Einheit ist.

3. IC-Karte nach Anspruch 1 oder 2, wobei die Speichervorrichtung eine erste nichtflüchtige Speichervorrichtung (3) für die Speicherung der Verarbeitungsprogramme und Daten umfaßt, die durch die Betriebs/Verarbeitungseinheit (1) verarbeitet werden sollen, und eine flüchtige zweite Speichervorrichtung (4) mit einer kürzeren Zugriffszeit als bei der ersten nichtflüchtigen Speichervorrichtung, wobei die besagte Betriebs/Verarbeitungseinheit (1) dazu dient, das besagte eine Programm und die Daten, die in dem nichtflüchtigen Speicher gespeichert sind, zur Ausführung zu übertragen.

4. IC-Karte nach Anspruch 1 oder 2, wobei die Speichervorrichtung eine erste nichtflüchtige Speichervorrichtung (3) für die Speicherung der Verarbeitungsprogramme und Daten sowie eine zweite Speichervorrichtung (4) mit einer kürzeren Zugriffszeit als bei der ersten Speichervorrichtung umfaßt, wobei die Betriebs/verarbeitungseinheit (1) dazu dient, die Verarbeitungsprogramme und/oder Daten von der ersten Speichervorrichtung an die zweite Speichervorrichtung zu übertragen, auf die zweite Speichervorrichtung zuzugreifen, um die Verarbeitungsprogramme und/oder Daten zu holen, und auf ein externes Signal zu reagieren.

5. IC-Karte nach Anspruch 3 oder 4, wobei die Betriebs/Verarbeitungseinheit ein Übertragungsprogramm (20) für die Übertragung des Verarbeitungsprogramms und/oder Daten von der ersten Speichervorrichtung an die zweite Speichervorrichtung umfaßt, wobei das besagte Übertragungsprogramm für die Übertragung der Verarbeitungsprogramme und/oder Daten von der ersten Speichervorrichtung (3) an die zweite Speichervorrichtung (4) ist, wenn die Chipvorrichtung in die externe Informationsverarbeitungseinheit (10) eingeschoben wird oder die Betriebs/Verarbeitungseinheit (1) ein vorgegebenes Steuersignal von der externen Einheit erhält.

6. IC-Karte nach Anspruch 3 oder 4, wobei die erste Speichervorrichtung (3) für die Speicherung eines Übertragungsprogramms für die Übertragung der Verarbeitungsprogramme und Daten von der ersten Speichervorrichtung an die zweite Speichervorrichtung (4) ist und die Betriebs/Verarbeitungseinheit (1) dazu dient, das Übertragungsprogramm auszuführen, um die Verarbeitungsprogramme und/oder Daten von der ersten Speichervorrichtung an die zweite Speichervorrichtung zu übertragen, wenn die Chipvorrichtung in eine externe Informationsverarbeitungseinheit (10) eingeschoben wird oder die Betriebs/Verarbeitungseinheit ein vorgegebenes Steuersignal erhält.

7. IC-Karte nach Anspruch 5, wobei nach Ende des Datenaustauschs zwischen der externen Einheit und der Betriebs/Verarbeitungseinheit (1) die Betriebs/Verarbeitungseinheit dazu dient, einen Datenrückführungsschritt für die Übertragung von Daten, die in der zweiten Speichervorrichtung (4) gespeichert sind, an einen Datenbereich (32) in der ersten Speichervorrichtung (3) auszuführen, welche der ursprünglichen Position der Daten entspricht, und um die zurückgegebenen Daten in dem Datenbereich abzuspeichern.

8. IC-Karte nach Anspruch 5, wobei die Betriebs/Verarbeitungseinheit (1) dazu dient, zu prüfen, ob auf einen Datenbereich (41) in der zweiten Speichervorrichtung (4) während des Datenaustauschs zwischen Betriebs/Verarbeitungseinheit (1) und der externen Einheit zugegriffen wird, und, nur wenn auf den Datenbereich in der zweiten Speichervorrichtung zugegriffen wird, nach Ende des Datenaustauschs zwischen Betriebs/Verarbeitungseinheit und der externen Einheit einen Datenrückführungsprozeßschritt für die Übertragung von in der zweiten Speichervorrichtung gespeicherten Daten zu dem Datenbereich (32) in der ersten Speichervorrichtung (3) entsprechend der ursprünglichen Position der Daten durchzuführen und die aktualisierten Daten in der besagten ersten Speichervorrichtung abzuspeichern.

9. IC-Karte nach einem der Ansprüche 3 bis 6, wobei die erste Speichervorrichtung einen Datenrückkehrprogrammbereich (31) hat und das Verarbeitungsprogramm für die Übertragung von der ersten Speichervorrichtung (3) zur zweiten Speichervorrichtung (4) und für die Ausführung durch die Betriebs/Verarbeitungseinheit (1) als ihre letzte Instruktion eine Instruktion für die Initiierung eines Datenrückgabeprozeßprogramms, gespeichert in der besagten ersten Speichervorrichtung, hat, wobei die Betriebs/Verarbeitungseinheit aufgrund des Datenrückgabeprogramms eine Datenrückgabeprozedur für die Übertragung von in der zweiten Speichervorrichtung gespeicherten Daten an einen Datenbereich (32), der der ursprünglichen Position der Daten innerhalb der ersten Speichervorrichtung entspricht, ausführt.

10. IC-Karte nach einem der Ansprüche 3 bis 6, wobei das Verarbeitungsprogramm für die Übertragung von der ersten Speichervorrichtung (3) an die zweite Speichervorrichtung (4) für die Ausführung durch die Betriebs/Verarbeitungseinheit (1) als ihr letztes Programm ein Datenrückgabeprogramm für die Verwendung bei der Übertragung von in der zweiten Speichervorrichtung gespeicherten Daten an einen Datenbereich (32) beinhaltet, der die ursprüngliche Position der Daten innerhalb der ersten Speichervorrichtung darstellt.

11. IC-Karte nach einem der Ansprüche 3 bis 10, wobei die erste Speichervorrichtung (4) ein SRAM ist.

12. IC-Karte nach einem der Ansprüche 3 bis 11, wobei die Speicherkapazität der zweiten Speichervorrichtung (4) nicht kleiner als die Summe der Speicherkapazität der ersten Speichervorrichtung (3) für die Abspeicherung der Vielzahl von Verarbeitungsprogrammen und der Speicherkapazität der ersten Speichervorrichtung für die Abspeicherung der Daten ist, und die Daten für die Übertragung von der ersten Speichervorrichtung und jedes der Vielzahl von Verarbeitungsprogrammen bei Betrieb in unterschiedlichen Bereichen (41, 40) der zweiten Speichervorrichtung gespeichert werden.

13. IC-Karte nach einem der Ansprüche 3 bis 12, wobei die Daten, die in der ersten Speichervorrichtung (3) gespeichert werden sollen, so unterteilt sind, daß sie in einer Vielzahl von Datenbereichen im Zusammenhang mit der Vielzahl von Verarbeitungsprogrammen gespeichert werden, und im Betrieb nur Daten, die in einem Datenbereich in Verbindung mit einem ausgewählten Verarbeitungsprogramm gespeichert sind, in die zweite Speichervorrichtung (4) übertragen werden.

14. IC-Karteninformationsverarbeitungssystem, welches eine IC-Karte (5) nach einem der vorangehenden Ansprüche umfaßt, sowie eine externe Informationsverarbeitungseinheit (10') zum Senden und Empfangen von Daten von und an eine Chipkarte, wenn die in die Informationsverarbeitungseinheit eingeschoben ist, wobei die Informationsverarbeitungseinheit dazu dient, an die Chipkarte Auswahlinformation zum Bezeichnen der Ausführung eines der mehreren Verarbeitungsprogramme und zum Identifizieren der externen Informationsverarbeitungseinheit zu senden.

15. IC-Karteninformationsverarbeitungssystem nach Anspruch 14, wobei die Speichervorrichtung (3, 4) der Chipvorrichtung Programmspeicherbereiche für das jeweilige Abspeichern der Vielzahl von Verarbeitungsprogrammen und einen Datenbereich für die Abspeicherung von Daten, auf die von allen in Verbindung mit der Vielzahl von Verarbeitungsprogrammen zugegriffen werden kann hat und die besagte Betriebs/Verarbeitungseinheit auf die Bezeichnungsinformation reagiert, um eines der Vielzahl von Verarbeitungsprogrammen auszuwählen und auf den Datenbereich zuzugreifen, der dem ausgewählten Verarbeitungsprogramm entspricht, um Daten zu übertragen an und zu empfangen von der Informationsverarbeitungseinheit (10').

## Revendications

1. Carte IC comprenant :
une unité (1) de traitement /opération,
des moyens de mémorisation (3, 4) pour stocker des données et une pluralité de programmes de traitement devant être exécutés par l'unité (1) de traitement/opération, et
un terminal pour communiquer une information de sélection désignant l'exécution de l'un desdits programmes de traitement avec une unité externe de traitement de l'information, caractérisé en ce que :
ladite information de sélection identifie en outre l'unité externe de traitement de l'information (5);
lesdits moyens de mémorisation (3, 4) comprennent une table de mémoire pour stocker une information d'identification qui identifie, par rapport à chacune des unités d'une pluralité d'unités externes de traitement de l'information, si chaque programme de traitement mémorisé dans ledit moyen de mémorisation est ou non exécutable quand la carte IC est introduite dans l'unité externe de traitement de l'information respective; et
en ce que l'unité (1) de traitement/opération est conçue pour consulter ladite table de mémoire afin de comparer l'information de sélection reçue par l'intermédiaire dudit terminal à l'information d'identification mémorisée dans la table de mémoire (33) et pour exécuter ledit programme de la pluralité de programmes de traitement désigné par ladite information de sélection quand l'information d'identification indique que ledit programme de traitement à exécuter est exécutable lorsque la carte IC est introduite dans l'unité externe de traitement de l'information identifiée par ladite information de sélection.

2. Carte IC selon la revendication 1, dans laquelle la table de mémoire (33) comprend une pluralité de zones de mémoire pour stocker une pluralité de codes d'identification prédéterminés relatifs à des unités externes et l'unité (1) de traitement/opération est conçue pour comparer une information d'identification supplémentaire, reçue de l'unité externe de traitement de l'information par l'intermédiaire du terminal, avec la pluralité de codes d'identification prédéterminés et pour décider de ne pas exécuter ledit programme de traitement quand l'unité externe n'est pas une unité autorisée.

3. Carte IC selon la revendication 1 ou 2, dans laquelle le moyen de mémorisation comprend un premier moyen de mémorisation (3) rémanent pour stocker les programmes de traitement et des données devant être exécutés par l'unité (1) de traitement/opération et un second moyen de mémorisation (4) non rémanent qui a un temps d'accès plus court que celui du premier moyen de mémorisation rémanent, sachant que ladite unité (1) de traitement/opération est conçue pour transférer ledit programme et les données mémorisés dans le moyen de mémorisation rémanent pour exécution.

4. Carte IC selon la revendication 1 ou 2, dans laquelle le moyen de mémorisation comprend un premier moyen de mémorisation (3) rémanent pour conserver les programmes de traitement et des données, et un second moyen de mémorisation (4) qui a un temps d'accès plus court que celui du premier moyen de mémorisation, sachant que ladite unité (1) de traitement/opération est conçue pour transférer les programmes de traitement et/ou les données mémorisées dudit premier moyen de mémorisation audit second moyen de mémorisation, pour accéder au second moyen de mémorisation afin de rechercher les programmes de traitement et/ou des données et pour répondre à un signal externe.

5. Carte IC selon la revendication 3 ou 4, dans laquelle l'unité de traitement/opération contient un programme (20) de traitement de transfert pour transférer le programme de traitement et/ou les données du premier moyen de mémorisation au second moyen de mémorisation, ledit programme de traitement de transfert servant à transférer les programmes de traitement et/ou les données du premier moyen de mémorisation (3) au second moyen de mémorisation (4) quand la carte IC est introduite dans l'unité externe (10) de traitement de l'information ou quand l'unité (1) de traitement/opération reçoit de l'unité externe un signal de commande prédéterminé.

6. Carte IC selon la revendication 3 ou 4, dans laquelle le premier moyen de mémorisation (3) sert à stocker un programme de traitement de transfert destiné à transférer les programmes de traitement et les données du premier moyen de mémorisation au second moyen de mémorisation (4) et l'unité (1) de traitement/opération est conçue pour exécuter le programme de traitement de transfert afin de transférer les programmes de traitement et/ou les données du premier moyen de mémorisation au second moyen de mémorisation quand la carte IC est introduite dans une unité externe (10) de traitement de l'information ou quand l'unité de traitement/opération reçoit un signal de commande prédéterminé.

7. Carte IC selon la revendication 5, dans laquelle une fois que l'échange de données entre l'unité externe et l'unité (1) de traitement/opération est terminé, l'unité de traitement/opération est adaptée pour effectuer une étape de traitement de retour des données destinée à transférer des données conservées dans le second moyen de mémorisation (4) dans une zone de données (32) du premier moyen de mémorisation (3) qui correspond à la position d'origine de ces données et pour stocker ces données retournées dans la zone de données.

8. Carte IC selon la revendication 5, dans laquelle l'unité (1) de traitement/opération est conçue pour vérifier si une zone de données (41) du second moyen de mémorisation (4) a été appelée pendant l'échange de données entre l'unité externe et l'unité (1) de traitement/opération et pour effectuer, uniquement dans le cas où la zone de données du second moyen de mémorisation a été appelée et une fois que l'échange de données entre l'unité externe et l'unité (1) de traitement/opération est terminé, une étape de traitement de retour des données destinée à transférer des données conservées dans le second moyen de mémorisation vers une zone de données (32) du premier moyen de mémorisation (3) qui correspond à la position d'origine de ces données et à stocker ces données réactualisées dans ledit premier moyen de mémorisation.

9. Carte IC selon l'une quelconque des revendications 3 à 6, dans laquelle le premier moyen de mémorisation comporte une zone (31) de programme de traitement de retour des données et le programme de traitement pour effectuer le transfert du premier moyen de mémorisation (3) au second moyen de mémorisation (4) et l'exécution par l'unité (1) de traitement/opération comporte, en tant que dernière instruction, une instruction pour initier un programme de traitement de retour des données mémorisé dans le premier moyen de mémorisation, ce qui fait que l'unité de traitement/opération effectue, sur la base du programme de traitement de retour des données, une procédure de traitement de retour des données destinée à transférer des données mémorisées dans le second moyen de mémorisation vers une zone de données (32) qui correspond à la position d'origine de ces données dans le premier moyen de mémorisation.

10. Carte IC selon l'une quelconque des revendications 3 à 6, dans laquelle le programme de traitement servant à effectuer le transfert du premier moyen de mémorisation (3) au second moyen de mémorisation (4) pour exécution par l'unité (1) de traitement/opération comporte, en tant que dernier programme, un programme de traitement de retour des données à utiliser dans le transfert des données mémorisées dans le second moyen de mémorisation vers une zone de données (32) qui correspond à la position d'origine de ces données dans le premier moyen de mémorisation.

11. Carte IC selon l'une quelconque des revendications 3 à 10, dans laquelle le premier moyen de mémorisation (3) est une mémoire RAM statique (SRAM).

12. Carte IC selon l'une quelconque des revendications 3 à 11, dans laquelle la capacité de mémoire du second moyen de mémorisation (4) n'est pas inférieure à la somme de la capacité de mémoire du premier moyen de mémorisation (3) utilisée pour stocker la pluralité des programmes de traitement et de la capacité de mémoire du premier moyen de mémorisation utilisée pour stocker les données, et les données à transférer du premier moyen de mémorisation et chaque programme de la pluralité de programmes de traitement sont stockés, en service, dans différentes zones (41, 40) du second moyen de mémorisation.

13. Carte IC selon l'une quelconque des revendications 3 à 12, dans laquelle une donnée à conserver dans le premier moyen de mémorisation (3) est divisée de manière à être stockée dans plusieurs zones de données en association avec la pluralité de programmes de traitement et, en service, seule la donnée conservée dans une zone de données associée à un programme de traitement sélectionné est transférée au second moyen de mémorisation (4).

14. Installation de traitement de l'information d'une carte IC qui comprend une carte IC (5) conforme à l'une quelconque des précédentes revendications; et une dite unité externe (10') de traitement de l'information destinée à transmettre et recevoir des données vers et depuis la carte IC lorsqu'elle est introduite dans l'unité de traitement de l'information, l'unité de traitement de l'information servant à transmettre à la carte IC une information de sélection pour désigner l'exécution de l'un des programmes de la pluralité de programmes de traitement et pour identifier l'unité externe de traitement de l'information.

15. Installation de traitement de l'information d'une carte IC selon la revendication 14, dans laquelle les moyens de mémorisation (3, 4) de la carte IC comportent des zones de mémorisation de programme pour respectivement stocker la pluralité des programmes de traitement et une zone de données pour stocker des données accessibles en commun en association avec la pluralité de programmes de traitement, et ladite unité de traitement/opération réagit à l'information de désignation pour choisir l'un des programmes de la pluralité de programmes de traitement et pour accéder à la zone de données qui correspond au programme de traitement choisi afin de transmettre et recevoir des données vers et depuis l'unité (10') de traitement de l'information.
